# DEMANDE DE BREVET EUROPEEN

(11) **EP 3 398 719 A1**
(43) Date de publication de la demande: **07.11.2018**
(21) Numéro de dépôt: 17169627.1
(22) Date de dépôt: 05.05.2017
(51) Int. Cl.: B25C 1/00, B25C 5/16

(54) **MAGASIN D'UN OUTIL DE FIXATION**

(71) Demandeur: Illinois Tool Works Inc., Glenview, IL 60025 (US)
(72) Inventeur: BODIN, Christophe, 26000 Valence (FR); VETTORETTI, Alain, 26500 Bourg Les Valence (FR); MARION, Cyril, 26800 Etoile sur Rhône (FR)
(74) Mandataire: Gevers & Orès

(57) **Abrégé**

Magasin (6) pour un outil de fixation comprenant une première voie de guidage (13) de têtes d'éléments de fixation d'un premier type, ladite première voie (13) s'étendant selon une direction (A) et étant configurée pour positionner des pointes desdits éléments de fixation de premier type à proximité d'un bord avant (15) s'étendant sensiblement parallèlement à ladite direction (A) ;
caractérisé en ce que le magasin (6) comprend une seconde voie de guidage (16) de têtes d'éléments de fixation d'un second type, les éléments de fixation de premier type présentant une longueur différente de celle des éléments de fixation de second type, ladite seconde voie (16) étant configurée pour positionner des pointes desdits éléments de fixation de second type à proximité dudit bord avant (15), le magasin (6) comprenant en outre un détrompeur (17) configuré pour empêcher l'introduction desdits éléments de fixation de second type dans la première voie (13).

## Description

### DOMAINE TECHNIQUE

L'invention concerne un magasin d'un outil de fixation comprenant au moins deux voies de guidage distinctes de têtes d'éléments de fixation en bande de longueurs différentes, ces voies étant configurées chacune pour positionner des pointes des éléments de fixation correspondants à proximité du bord avant du magasin, et un détrompeur.

### ETAT DE L'ART

Les outils de fixation sont des outils permettant d'entraîner un élément de fixation (agrafe, clou, pointe, épingle, etc.) dans un matériau support (notamment en bois, en béton ou en acier). Pour cela, une lame en mouvement vient percuter un élément de fixation (par exemple au niveau de la tête dans le cas d'un clou) présent dans une chambre de tir pour lancer ce dernier afin qu'il puisse s'ancrer dans le matériau support. La lame est mise en mouvement par un dispositif d'entraînement utilisant par exemple une énergie thermique et/ou électrique et/ou pneumatique.

De manière générale, un tel outil comprend un nez (également appelé guide-pointe) et un bloc de cisaillement (également appelé connecteur ou bloc de connexion) délimitant intérieurement la chambre de tir. Le bloc de cisaillement fait partie intégrante d'un magasin monté en appui, de manière amovible, sur le nez de l'outil. Les éléments de fixation stockés dans le magasin sont introduits un à un dans la chambre de tir à travers une fenêtre d'alimentation pratiquée dans le bloc de cisaillement.

Dans le cas d'un outil du type cloueur, une recharge se présente généralement sous la forme d'une bande de clous, les clous étant accolés les uns aux autres avec un pas constant et maintenus en position par des moyens de maintien appropriés tels que des bandes adhésives.

De manière générale, lorsqu'une recharge est guidée dans le magasin par les têtes de clous, le magasin comprend une unique voie de guidage quel que soit le type de clous à tirer, et notamment lorsque seule la longueur des clous à tirer varie.

Tel que décrit dans le document FR-B1-2920332 au nom de la demanderesse, en accord avec le cas cité ci-dessus, le bloc de cisaillement comprend un dispositif d'ajustement de la longueur effective de la fenêtre d'alimentation de la chambre de tir en fonction de la longueur des clous à tirer.

Plus précisément, le dispositif d'ajustement se présente sous la forme d'un volet rabattable obturant par défaut une portion de la fenêtre d'alimentation de la chambre de tir, le volet occupant alors une position dite déployée. Ce volet est en l'occurrence configuré pour s'effacer sous l'action de clous dit longs introduits dans le magasin et ainsi permettre à ces derniers d'atteindre la chambre de tir, le volet occupant alors une position dite rabattue.

Au cours de l'utilisation du cloueur, on constate à de nombreuses reprises que le volet se coince en position rabattue par l'accumulation de résidus de bandes adhésives dans les interstices formées entre le volet et le logement dans lequel il est placé en position rabattue.

Ce coincement du volet en position rabattue est problématique lorsque des clous dits courts sont tirés.

En effet, dans ce cas de figure, à la suite de la percussion du clou par la lame, ce dernier est alors susceptible d'heurter les bords à découvert de la fenêtre d'alimentation (portion non obturée), par voie de conséquence de se tordre, puis de se diriger sous l'effet de l'impact soit dans le magasin, provoquant alors un enrayement du cloueur, soit dans le matériau support, obligeant alors l'utilisateur à remplacer le clou défectueux.

On note que dans le cas explicité ci-dessus on parle plus communément de « crochetage » de clous à l'intérieur ou à l'extérieur du magasin.

L'objectif de la présente invention est de proposer un magasin permettant de remédier aux inconvénients précités.

### EXPOSE DE L'INVENTION

Selon un premier aspect, l'invention concerne un magasin pour un outil de fixation comprenant, une première voie de guidage de têtes d'éléments de fixation en bande d'un premier type, ladite première voie de guidage s'étendant selon une direction A et étant configurée pour positionner des pointes desdits éléments de fixation de premier type à proximité d'un bord avant du magasin s'étendant sensiblement parallèlement à ladite direction A ; caractérisé en ce que le magasin comprend une seconde voie de guidage de têtes d'éléments de fixation d'un second type en bande, les éléments de fixation de premier type présentant une longueur différente de celle des éléments de fixation de second type, ladite seconde voie de guidage étant sensiblement parallèle et espacé à ladite première voie, ladite seconde voie étant configurée pour positionner des pointes desdits éléments de fixation de second type à proximité dudit bord avant du magasin, le magasin comprenant en outre un détrompeur configuré pour empêcher l'introduction desdits éléments de fixation de second type dans la première voie de guidage.

Un tel magasin permet de positionner les pointes des clous stockés à proximité du bord avant quels que soit les clous à tirer. Ainsi, il n'est plus nécessaire d'inclure de dispositif d'ajustement de la longueur effective de la fenêtre d'alimentation de la chambre de tir en fonction de la longueur des clous à tirer, au bénéfice de la fiabilité du magasin et de manière plus générale de l'outil.

En outre, afin d'éviter que l'utilisateur ne se trompe de voie lors du remplissage du magasin, ce dernier comprend un détrompeur, au bénéfice notamment de la durée de vie de l'outil et de la productivité.

Le magasin selon l'invention peut comprendre une ou plusieurs des caractéristiques suivantes, prises isolément les unes des autres ou en combinaison les unes avec les autres :
- le détrompeur comprend un organe monté sur des moyens de rappel dans un logement dudit magasin, l'organe étant apte à rencontrer lesdits éléments de fixation de premier et second type ;
- l'organe comprend :
   - une première portion présentant une forme configurée pour escamoter l'organe d'une part lorsque lesdits éléments de fixation de second type sont introduits dans ladite seconde voie de guidage et viennent au contact de ladite première portion, et d'autre part lorsque lesdits éléments de fixation de premier type sont introduits dans ladite première voie de guidage et viennent au contact de ladite première portion ;
   - une seconde portion présentant une forme configurée pour s'opposer aux éléments de fixation de second type lors de leur introduction dans ladite première voie de guidage ;
- la première portion présente une surface bombée de contact avec lesdits éléments de fixation et la seconde portion présente une surface plane de contact avec lesdits éléments de fixation ;
- ladite surface bombée présente un profil constant suivant une direction d'extension sensiblement parallèle à une direction d'allongement des éléments de fixation lors de leur introduction dans le magasin et ladite surface plane est sensiblement parallèle à ladite direction d'allongement ;
- ladite surface bombée est sensiblement semi-cylindrique ;
- la première portion comprend une base parallélépipédique directement en contact avec les moyens de rappel et logée au moins en partie dans ledit logement dudit magasin ;
- ladite surface plane est en retrait par rapport à ladite surface bombée, suivant ladite direction ;
- la première portion dudit organe est venue de matière avec la seconde portion ;
- le magasin comprend une première enveloppe et une seconde enveloppe complémentaires formant intérieurement un compartiment de stockage desdits éléments de fixation dans lequel fait saillie au moins en partie l'organe, lesdites enveloppes étant montées l'une par rapport à l'autre suivant une direction de montage, l'organe étant apte à s'escamoter dans son logement suivant ladite direction ;
- chacune desdites voies est formée par deux rainures en regard l'une de l'autre et respectivement pratiquées au moins en partie dans lesdites première et seconde enveloppes ;
- le logement est défini dans une cloison maintenue en position entre lesdites première et seconde enveloppes.

Selon un second aspect, l'invention concerne un outil de fixation comprenant un magasin tel que précédemment décrit.

### BREVE DESCRIPTION DES FIGURES

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue de face d'un outil de fixation comprenant un magasin selon l'invention ;
- la figure 2 est une vue de face illustrant l'introduction d'une recharge de clous longs dans le magasin ;
- la figure 3 est une vue de face illustrant l'introduction d'une recharge de clous courts dans le magasin ;
- la figure 4 est une vue en perspective éclatée du magasin ;
- la figure 5 est une vue en perspective partiellement éclatée illustrant le comportement d'un détrompeur du magasin lors de l'introduction des clous longs dans une première voie du magasin ;
- la figure 6 est une vue en perspective partiellement éclatée illustrant le comportement du détrompeur lors de l'introduction des clous courts dans la première voie du magasin ;
- la figure 7 est une vue en perspective partiellement éclatée illustrant le comportement du détrompeur lors de l'introduction des clous courts dans une seconde voie du magasin ;
- la figure 8 est une vue de face de la figure 7, dans laquelle la partie supérieure du magasin a été cachée.

### DESCRIPTION DETAILLEE

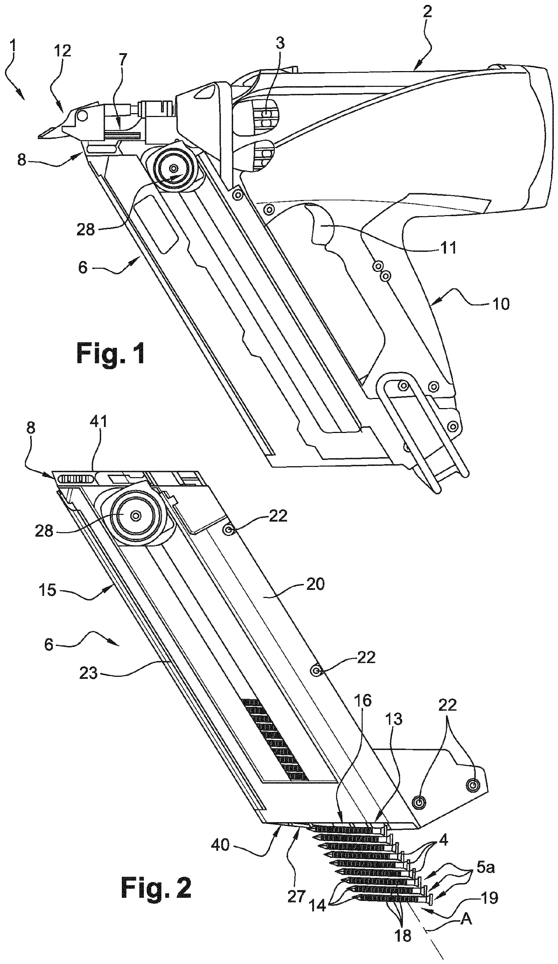

L'outil de fixation 1 représenté sur la figure 1 est dans le cas présent un cloueur 1.

Tel qu'illustré sur la figure 1, l'outil 1 comprend un boîtier 2 dans lequel se trouve un dispositif d'entraînement 3 configuré pour mettre en mouvement une lame. La lame est en l'occurrence apte à percuter une tête 4 d'un clou, présent dans une chambre de tir et extrait d'un magasin d'alimentation 6, pour lancer ce clou afin qu'il puisse s'ancrer dans un matériau support.

A l'avant du boîtier 2, un nez 7 et un bloc de cisaillement 8 délimite intérieurement la chambre de tir et une bouche au travers de laquelle le clou quitte la chambre. Le bloc de cisaillement 8 fait partie intégrante du magasin 6 monté en appui, de manière amovible, sur le nez 7 de l'outil 1. Les clous 5a, 5b stockés dans le magasin 6 sont introduits un à un dans la chambre de tir à travers une fenêtre d'alimentation 9 pratiquée dans le bloc de cisaillement 8.

L'outil 1 comporte en outre une poignée 10 de préhension et de manipulation formée par le boîtier 2. Une détente 11 d'actionnement, placée en partie haute de la poignée 10, permet à l'utilisateur d'initier le tir, sous condition qu'un palpeur 12 soit enclenché.

Le magasin 6 comprend une première voie de guidage 13 de têtes 4 de clous 5a en bande d'un premier type, la première voie de guidage 13 s'étendant selon une direction A et étant configurée pour positionner des pointes 14 des clous 5a de premier type à proximité d'un bord avant 15 du magasin 6 s'étendant sensiblement parallèlement à la direction A.

Le magasin 6 comprend en outre une seconde voie de guidage 16 de têtes 4 de clous 5b d'un second type en bande, les clous 5a de premier type présentant une longueur différente de celle des clous 5b de second type, la seconde voie de guidage 16 étant sensiblement parallèle et espacé à la première voie 13, la seconde voie 16 étant configurée pour positionner des pointes 14 des clous 5b de second type à proximité du bord avant 15 du magasin 6.

Le magasin 6 comprend aussi un détrompeur 17 configuré pour empêcher l'introduction des clous 5b de second type dans la première voie de guidage 13.

Les termes « avant », « arrière », « inférieure » et « supérieure » associés au magasin 6 sont définis par rapport à un magasin 6 monté sur l'outil 1, ce dernier se trouvant dans une position classique de fonctionnement, tel qu'illustré sur les figures 1 à 3.

L'outil 1 est en l'occurrence configuré pour tirer des clous 5a, 5b en bande de premier et second type.

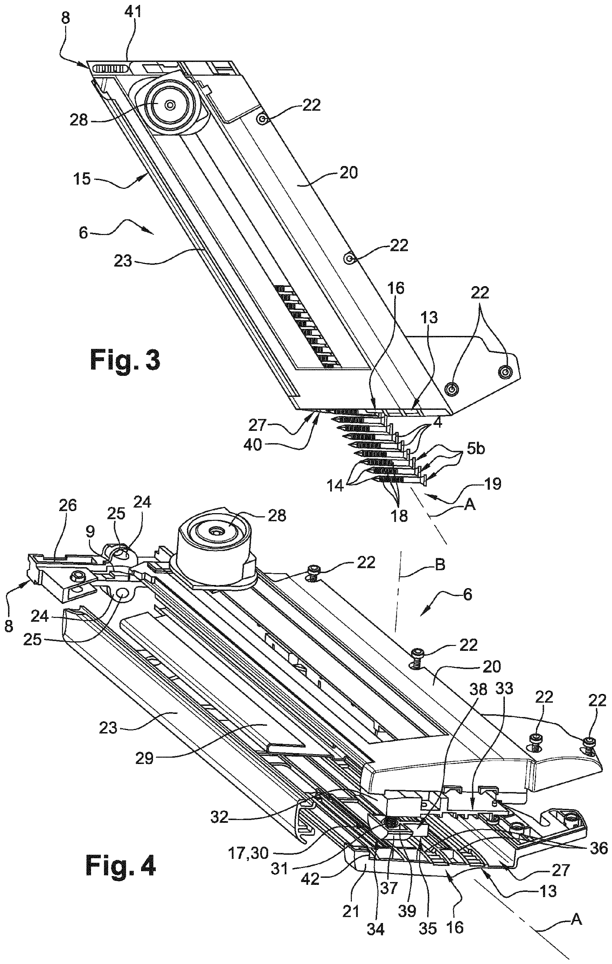

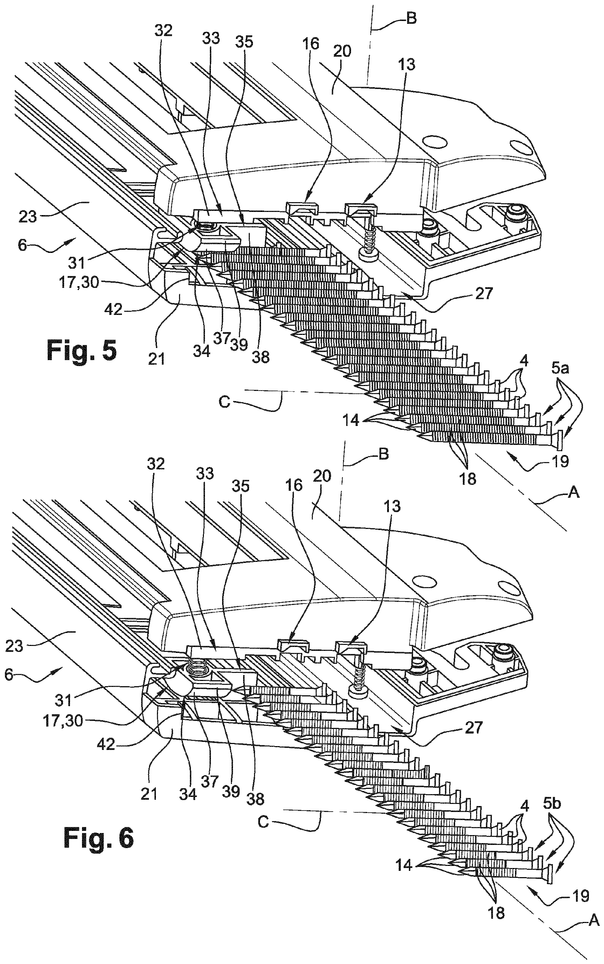

Selon le mode de réalisation illustré sur les figures, les clous de premier type 5a et les clous de second type 5b diffèrent uniquement par leurs caractéristiques dimensionnelles, et plus précisément par leur longueur, à savoir le premier type de clous 5a dits « clous longs 5a » (figures 2 et 5) présente une longueur supérieure au second type de clous 5b dits « clous courts 5b » (figures 3, 6 et 7).

Les clous 5a, 5b représentés sur les figures sont destinés à fixer un premier élément métallique à un élément en bois. L'élément métallique est par exemple un connecteur, un sabot, une équerre, etc. L'élément en bois est par exemple un liteau, une latte, une contrelatte, une volige, etc. Les clous 5a, 5b présentent notamment les caractéristiques géométriques et mécaniques suivantes :
- une tête 4 ronde ;
- une tige 18 centrée par rapport à la tête 4 et en majorité crantée ;
- une pointe 14 à quatre pans inclinés ;
- le clou est en acier trempé, par exemple galvanisé.

Toutefois, le mode de réalisation illustré sur les figures n'est en rien limitatif, ainsi en plus de la longueur, les clous de premier et second type peuvent présenter des caractéristiques différentes, et notamment en ce qui concerne les dimensions, la géométrie et les propriétés mécaniques.

A titre d'exemple, en lien avec la géométrie d'un clou, la tête peut être notamment de forme ronde ou en forme de D. La tige peut être centrée ou décentrée par rapport à la tête. La tige peut être notamment lisse, crantée, torsadée.

Tel qu'illustré sur les figures, une recharge 19 se présente sous la forme d'une bande de clous 5a, 5b, les clous 5a, 5b étant accolés les uns aux autres avec un pas constant et maintenus en position par des bandes adhésives en papier (non représentées). Les clous 5a, 5b sont inclinés par rapport à la direction d'extension des bandes adhésives.

Selon le mode de réalisation illustré sur les figures, le magasin 6 est de forme parallélépipédique, et comprend une première enveloppe 20 et une seconde enveloppe 21 complémentaires de sorte à former un boîtier. Les enveloppes 20, 21 sont montées l'une par rapport à l'autre suivant une direction de montage B, ces enveloppes 20, 21 définissant intérieurement un compartiment de stockage des clous 5a, 5b à tirer. Les enveloppes 20, 21 ceinturent une partie inférieure du bloc de cisaillement 8, de sorte que ce dernier fasse partie intégrante du magasin 6 et qu'une partie supérieure fasse saillie par rapport aux enveloppes 20, 21. Les enveloppes 20, 21 sont maintenues en position l'une contre l'autre, en partie arrière, via plusieurs vis 22 réparties sur la hauteur du magasin 6. En outre, les enveloppes 20, 21 sont maintenues en position, en partie avant, via une goulotte de maintien 23 s'étendant sur toute la hauteur du magasin 6. La goulotte 23 définit le bord avant 15 du magasin 6.

Afin d'assurer la mise en position du bloc de cisaillement 8 par rapport au nez 7, la partie supérieure du bloc de cisaillement 8 comprend deux oreilles 24 disposées de part et d'autre de la fenêtre d'alimentation 9, chacune d'elles comprenant un alésage 25 apte à recevoir un pion de forme complémentaire formé dans le nez 7 de l'outil 1. En outre, la partie supérieure du bloc de cisaillement 8 comprend deux encoches 26 disposées de part et d'autre de la fenêtre d'alimentation 9, chacune d'elles étant apte à recevoir une dent de forme complémentaire formée dans le nez 7 de l'outil 1.

Tel qu'illustré sur les figures 2 à 7, le magasin 6 comprend une ouverture 27 inférieure délimitée par les enveloppes 20, 21 et au travers de laquelle sont insérés les clous 5a, 5b en bandes suivant la direction A, la direction A correspondant ainsi à la direction d'introduction (respectivement de vidange) des clous 5a, 5b dans le magasin 6. Le magasin 6 comprend en outre un élévateur 28 permettant notamment de remonter la recharge 19 de clous 5a, 5b à la suite de chaque tir, et autrement dit de recharger la chambre de tir. Le magasin 6 comprend également un guide 29 placé dans le compartiment de stockage, le guide 29 permettant d'imposer une trajectoire aux clous 5a, 5b stockés.

Tel qu'illustré sur la figure 6, le détrompeur 17 est configuré pour empêcher l'introduction des clous courts 5b dans la première voie de guidage 13, la première voie 13 étant pour rappel destinée au guidage des clous longs 5a.

Le détrompeur 17 comprend un organe 30 monté sur des moyens de rappel 31 dans un logement 32 du magasin 6, l'organe 30 étant apte à rencontrer les clous courts et longs 5b, 5a insérés dans le magasin 6.

Tel qu'illustré sur les figures 4 à 7, l'organe 30 est monté sur un ressort 31 cylindrique de compression à spires dans son logement 32 de sorte que l'organe 30 soit par défaut en position sortie sous l'effet du ressort 31 (ressort 31 au repos), l'organe 30 venant alors en butée contre la seconde enveloppe 21. L'organe 30 se trouve à proximité de l'ouverture 27 d'insertion des bandes de clous 5a, 5b. Le logement 32 est défini dans une cloison 33 maintenue en position entre les enveloppes 20, 21, et dans le cas présent fixée à la première enveloppe 20.

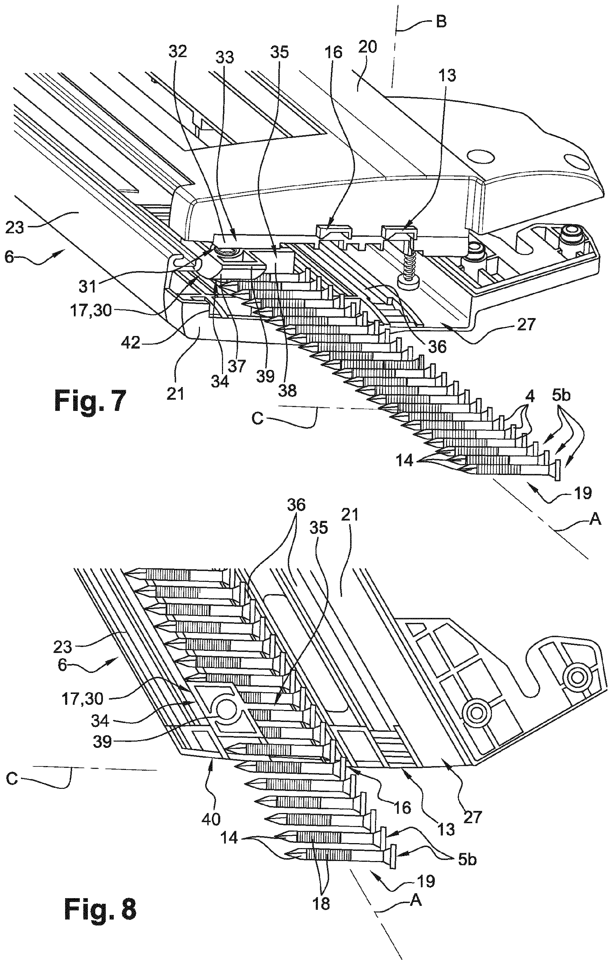

L'organe 30 comprend une première portion 34 présentant une forme configurée pour escamoter l'organe 30 d'une part lorsque les clous courts 5b sont introduits dans la seconde voie 16 et viennent au contact de la première portion 34 (figure 7), et d'autre part lorsque les clous longs 5a sont introduits dans la première voie de guidage 13 et viennent au contact de la première portion 34 (figure 5).

L'organe 30 comprend en outre une seconde portion 35 présentant une forme configurée pour s'opposer aux clous courts 5b lors de leur introduction dans la première voie de guidage 13 (figure 6).

Tel qu'illustré sur les figures 5 à 8, l'agencement du détrompeur 17 par rapport aux voies de guidage 13, 16 ainsi que le profil du détrompeur 17 sont déterminés de telle sorte que la première portion 34 de l'organe 30 soient heurtée par les clous courts 5b lors de leur introduction dans la seconde voie 16 (figure 7) et par les clous longs 5a lors de leur introduction dans la première voie 13 (figure 5). En outre, la seconde portion 35 de l'organe 30 est heurtée par les clous courts 5b lors de leur introduction dans la première voie 13 (figure 6).

Tel qu'illustré sur la figure 4, d'avant en arrière, le magasin 6 comprend le détrompeur 17, la première voie 13 puis la seconde voie 16. Chacune des voies 13, 16 est formée par deux rainures 36 en regard l'une de l'autre et respectivement pratiquées dans les première et seconde enveloppes 20, 21.

La surface de contact 37 de la première portion 34 est profilée de manière à ce que la direction de la force exercée par les clous 5a, 5b sur la première portion 34 (lors du contact entre les clous et la première portion) soit sensiblement parallèle à la direction B de façon à escamoter le détrompeur 17 et permettre le passage des clous 5a, 5b dans le compartiment de stockage (figures 5 et 7).

Au contraire, la surface de contact 38 de la seconde portion 35 est profilée de manière à ce que la direction de la force exercée par les clous 5b sur la seconde portion 35 (lors du contact entre les clous et la seconde portion), soit sensiblement perpendiculaire à la direction B de façon à immobiliser le détrompeur 17, ce dernier s'opposant alors au passage des clous 5b dans le compartiment de stockage (figure 6).

Tel qu'illustré sur les figures 4 à 8, la première portion 34 présente une surface bombée de contact 37 avec les clous 5a, 5b, et plus précisément sensiblement semi-cylindrique. La surface bombée 37 présente un profil constant suivant une direction d'extension sensiblement parallèle à une direction d'allongement C des clous 5a, 5b lors de leur introduction dans le magasin 6. La surface bombée 37 surplombe une base 39 parallélépipédique directement en contact avec le ressort 31 et logée dans le logement 32 du magasin 6. En référence à la figure 8, les flancs de la première portion 34 sont sensiblement parallèles au bord avant 15 du magasin 6 (et autrement dit à la direction A).

Tel qu'illustré sur les figures 4 à 8, la seconde portion 35 présente une surface plane de contact 38 avec les clous 5b. La surface plane 38 est en retrait par rapport à la surface bombée 37, suivant la direction A. En vue de face (figures 1 à 3), la surface plane 38 est sensiblement parallèle à la direction d'allongement C des clous 5b lors de leur introduction dans le magasin 6, et autrement dit la surface plane 38 est sensiblement parallèle au plan défini par un bord plan inférieur 40 ou une surface plane de jointure 41 du bloc de cisaillement 8 avec le nez 7 de l'outil 1.

Tel qu'illustré sur les figures, lorsque le ressort 31 est au repos, l'organe 30 fait saillie dans le compartiment de stockage de sorte que les surfaces de contact 37, 38 des première et seconde portions 34, 35 soient en regard de l'ouverture 27 d'insertion des bandes de clous 5a, 5b. Cette disposition garantit que lors de l'insertion d'une bande 19 de clous (clous courts 5b ou clous longs 5a), cette dernière vienne au contact de l'organe 30. Le détrompeur 17 est configuré pour permettre la vidange du magasin d'alimentation 6. L'organe 30 est ainsi sensiblement symétrique suivant un plan passant par la surface plane 38 de la seconde portion 35.

Tel qu'illustré sur les figures, la première portion 34 de l'organe 30 est venue de matière avec la seconde portion 35. En variante, les première et seconde portions 34, 35 pourraient être réalisées indépendamment l'une de l'autre puis assemblées via des moyens de fixation.

L'introduction de clous longs 5a dans la seconde voie de guidage 16 n'est pas possible. En effet, dans un tel cas de figure, les tiges 18 des clous longs 5a viennent heurter contre une limite avant 42 de l'ouverture 27 de sorte à empêcher leur introduction. L'utilisateur remédie à cette situation en introduisant de manière intuitive les clous longs 5a dans la première voie de guidage 13.

## Revendications

1. Magasin (6) pour un outil de fixation (1) comprenant, une première voie de guidage (13) de têtes (4) d'éléments de fixation en bande d'un premier type (5a), ladite première voie de guidage (13) s'étendant selon une direction (A) et étant configurée pour positionner des pointes (14) desdits éléments de fixation de premier type (5a) à proximité d'un bord avant (15) du magasin (6) s'étendant sensiblement parallèlement à ladite direction (A) ;
**caractérisé en ce que** le magasin (6) comprend une seconde voie de guidage (16) de têtes (4) d'éléments de fixation d'un second type (5b) en bande, les éléments de fixation de premier type (5a) présentant une longueur différente de celle des éléments de fixation de second type (5b), ladite seconde voie de guidage (16) étant sensiblement parallèle et espacé à ladite première voie (13), ladite seconde voie (16) étant configurée pour positionner des pointes (14) desdits éléments de fixation de second type (5b) à proximité dudit bord avant (15) du magasin (6), le magasin (6) comprenant en outre un détrompeur (17) configuré pour empêcher l'introduction desdits éléments de fixation de second type (5b) dans la première voie de guidage (13).

2. Magasin (6) selon la revendication 1, **caractérisé en ce que** le détrompeur (17) comprend un organe (30) monté sur des moyens de rappel (31) dans un logement (32) dudit magasin (6), l'organe (30) étant apte à rencontrer lesdits éléments de fixation de premier et second type (5a, 5b).

3. Magasin (6) selon la revendication 2, **caractérisé en ce que** l'organe (30) comprend :
• une première portion (34) présentant une forme configurée pour escamoter l'organe (30) d'une part lorsque lesdits éléments de fixation de second type (5b) sont introduits dans ladite seconde voie de guidage (16) et viennent au contact de ladite première portion (34), et d'autre part lorsque lesdits éléments de fixation de premier type (5a) sont introduits dans ladite première voie de guidage (13) et viennent au contact de ladite première portion (34) ;
• une seconde portion (35) présentant une forme configurée pour s'opposer aux éléments de fixation de second type (5b) lors de leur introduction dans ladite première voie de guidage (13).

4. Magasin (6) selon la revendication 3, **caractérisé en ce que** la première portion (34) présente une surface bombée de contact (37) avec lesdits éléments de fixation (5a, 5b) et la seconde portion (35) présente une surface plane de contact (38) avec lesdits éléments de fixation (5b).

5. Magasin (6) selon la revendication 4, **caractérisé en ce que** ladite surface bombée (37) présente un profil constant suivant une direction d'extension sensiblement parallèle à une direction d'allongement (C) des éléments de fixation (5a, 5b) lors de leur introduction dans le magasin (6) et ladite surface plane (38) est sensiblement parallèle à ladite direction d'allongement (C).

6. Magasin (6) selon l'une des revendications 4 ou 5, **caractérisé en ce que** ladite surface bombée (37) est sensiblement semi-cylindrique.

7. Magasin (6) selon l'une des revendications 3 à 6, **caractérisé en ce que** la première portion (34) comprend une base (39) parallélépipédique directement en contact avec les moyens de rappel (31) et logée au moins en partie dans ledit logement (32) dudit magasin (6).

8. Magasin (6) selon l'une des revendications 4 à 7, **caractérisé en ce que** ladite surface plane (38) est en retrait par rapport à ladite surface bombée (37), suivant ladite direction (A).

9. Magasin (6) selon l'une des revendications 3 à 8, **caractérisé en ce que** la première portion (34) dudit organe (30) est venue de matière avec la seconde portion (35).

10. Magasin (6) selon l'une des revendication 2 à 9, **caractérisé en ce que** le magasin (6) comprend une première enveloppe (20) et une seconde enveloppe (21) complémentaires formant intérieurement un compartiment de stockage desdits éléments de fixation (5a, 5b) dans lequel fait saillie au moins en partie l'organe (30), lesdites enveloppes (20, 21) étant montées l'une par rapport à l'autre suivant une direction de montage (B), l'organe (30) étant apte à s'escamoter dans son logement (32) suivant ladite direction (B).

11. Magasin (6) selon la revendication 10, **caractérisé en ce que** chacune desdites voies (13, 16) est formée par deux rainures (36) en regard l'une de l'autre et respectivement pratiquées au moins en partie dans lesdites première et seconde enveloppes (20, 21).

12. Magasin (6) selon l'une des revendications 10 ou 11, **caractérisé en ce que** le logement (32) est défini dans une cloison (33) maintenue en position entre lesdites première et seconde enveloppes (20, 21).

13. Outil de fixation (1) comprenant un magasin (6) selon l'une des revendications précédentes.
